# EUROPEAN PATENT SPECIFICATION

(11) **EP 0 292 030 B1**
(45) Date of publication and mention of the grant of the patent: **20.12.1995**
(21) Application number: 88200703.2
(22) Date of filing: 12.04.1988
(51) Int. Cl.: B01J 29/08, C10G 47/16, C10G 49/08

(54) **Process for the preparation of modified zeolites**
Verfahren zur Herstellung von veränderten Zeolithen
Procédé de préparation de zéolites modifiées

(30) Priority: 14.04.1987 GB 8708961
(43) Date of publication of application: 23.11.1988
(73) Proprietor: SHELL INTERNATIONALE RESEARCH MAATSCHAPPIJ B.V., 2596 HR Den Haag (NL)
(72) Inventor: Klazinga, Aan Hendrik, NL-1031 CM Amsterdam (NL)

(56) References cited:
- FR-A- 2 030 800
- GB-A- 2 176 128
- US-A- 3 322 690
- US-A- 3 714 029
- US-A- 3 830 725

## Description

The present invention relates to a process for the preparation of modified zeolites and zeolites thus prepared. The zeolites produced in accordance with the present invention can be used as catalyst carriers and/or as catalysts in various fields such as hydroprocessing and catalytic cracking, in particular in various hydrocracking processes.

The use of zeolites as catalysts and/or catalyst carriers has been recognized since long and many methods to improve zeolitic base materials have been reported in the art. In zeolite research and development much attention has been devoted to physically changing the nature and possibly the properties of zeolitic base materials, e.g. by calcining, calcining under so-called self-steaming conditions or by wet calcination. Also the treatment with ammonium-ions in various stages of the zeolite preparation procedures has been reported. It has also been reported that zeolites can be modified by treating them with certain metal salt solutions in combination with various pre- and after- treatments to ensure that the zeolites are produced in the most active form.

In this respect reference is made to US-A-4,415,439, describing a zeolite modification, in which a sodium type Y zeolite is exchanged with an ammonium salt solution, the ammonium exchanged zeolite is calcined, e.g. in a self-steaming condition, and the calcined product is reacted with an acidic aluminium salt solution. Subsequently, the aluminium-exchanged zeolite is again subjected to ammonium-exchange.

US-A-3,714,029 discloses a process for preparing a modified zeolite from an alkali form of crystalline zeolite having a faujasite crystal structure by (1) substantially removing alkali metal ions by ion exchange, (2) incorporating zinc ions from an aqueous solution and (3) calcination at about 800 °C (Column 2, lines 14 to 19). It is stated in Column 4, lines 26 to 30 that calcination below about 775 °C is not effective to accomplish the desired results and that temperatures above about 825 °C result in structural damage. Therefore calcination should be closely controlled to about 800 °C.

In Example 1 of US-A-3,714,029, the properties of a zinc-modified zeolite are compared with those of an aluminium-modified zeolite and a magnesium-modified zeolite (see Table 1). The zinc-modified zeolite was prepared by the above process using the sodium form of a Y-faujasite zeolite (not being an ultra-stable Y zeolite) known as SK-40. The aluminium- and magnesium-modified zeolites were prepared in similar manner except for the substitution of aluminium or magnesium ions for the zinc ions in the second stage. The data in Table 1 clearly show that whilst the relative crystallinity of the magnesium-modified zeolite was generally comparable to that of the zinc-modified zeolite, the relative crystallinity of the aluminium-modified zeolite was considerably inferior to that of the zinc-modified zeolite. Indeed, in some instances the relative crystallinity of the aluminium-modified zeolite was zero (0), indicating that it had become completely amorphous. Furthermore, Table 1 shows that the aluminium-modified zeolite had significantly lower catalytic activity than either of the magnesium- and zinc-modified zeolites.

FR-A-2,030,800 discloses a process for stabilising a sodium crystalline aluminosilicate of the zeolite variety having a silica to alumina ratio of 3.2:1 or greater which comprises the steps of:
a) reducing the sodium oxide (Na₂O) content of the zeolite to about 1.5 to 4 weight per cent by ion exchange with a salt solution which, on heating, leaves the zeolite in the hydrogen form,
b) ion-exchanging the zeolite with a non-alkaline solution of a metal salt in a concentration sufficient to impart a metal content of about 0.3 to 10 weight per cent to the zeolite,
c) drying and calcining the exchanged zeolite at a temperature of from about 370 to 870 °C for about 6 minutes to 3 hours, and
d) washing, drying and recovering the zeolite product (see the text from Page 1, line 33 to Page 2, line 10).

In Examples 9 and 11 of FR-A-2,030,800, modified zeolites were prepared by the above process using a range of different metals: aluminium, cobalt, chromium, copper, iron, lanthanum, lithium, magnesium, manganese, nickel, potassium and zirconium. The zeolites used as starting materials in Examples 9 and 11 are referred to respectively as a high silica faujasite and a sodium Y zeolite. There is no indication in either Example that the zeolites used were of the ultra-stable Y type.

If reference is made to Table E in Example 9, it will be observed that of the 12 metals used, the modified zeolites containing cobalt and iron showed the best catalytic activity (89%) whilst the modified zeolite containing potassium showed the worst activity (30%). The modified zeolite containing aluminium demonstrated only marginally better catalytic activity (43%) than the modified zeolite containing potassium. A similar finding is obtained from the data presented in Table G in Example 11. There also the modified zeolite containing potassium showed the worst catalytic activity (14%) with the modified zeolite containing aluminium showing only slightly better catalytic activity (27%). The best activity was found with modified zeolites containing lanthanum (72%) and cobalt/nickel (64%).

In the course of the development of zeolites it has now been found that zeolites can be modified by treatment with certain metal-ions without requiring pre- or after-treatment with ammonium-ions. Moreover, the crystallinity of the starting material can be substantially maintained during the modification procedure.

The present invention thus relates to a process for the preparation of a modified zeolite by treatment with a solution of one or more metal salts and a calcination which comprises treating a US-Y zeolite having a sodium oxide content of at least 2.2 %wt and an alkali oxide/aluminium oxide molar ratio between 0.13 and 1 with a solution of a salt of a multi-valent metal ion of Group 3a and converting the thus treated zeolite by calcination at a temperature in the range from 350 to 850 °C into a product having a unit cell size between 2.421 nm (24.21 Å) and 2.440 nm (24.40 Å).

The present invention relates in particular to a process for the preparation of zeolites of the Y-type. As starting materials, zeolites known as ultra-stable Y (US-Y) are used, provided that they are in the rather high alkali oxide form. Preferably, starting materials are used having an alkali oxide content between 2.2 and 15 %wt. Although not necessary, a treatment with an ammonium salt can be carried out but care should be taken not to reduce the alkali oxide/aluminium oxide molar ratio to a value below 0.13. It is one of the advantages of the present invention that the pre-treatment with an ammonium-salt is no longer needed or only to a limited extent. Also, an ammonium-exchange as after-treatment, prescribed in US-A-4,415,439 is no longer necessary. Preferably, the zeolite treated with a solution of a salt of a multi-valent metal ion is calcined without having been subjected to any after-treatment which affects the alkali oxide/aluminium oxide ratio of the zeolite thus treated.

Suitably the process according to the present invention is carried out using a US-Y having a sodium oxide content between 2.2 and 13.5 %wt, in particular between 2.5 and 13 %wt. Both high sodium oxide containing materials and materials wherein part of the sodium oxide has been replaced can be suitably used as starting materials. The process according to the present invention is carried out in such a way that the product after calcining has a unit cell size between 2.421 nm (24.21 Å) and 2.440 nm (24.40 Å).

The zeolitic base materials to be modified according to the process according to the present invention are treated with a metal-ion salt solution of a Group 3a metal, for example, aluminium or gallium.

Very good results, expressed as a low unit cell size whilst maintaining a substantial amount of crystallinity, have been obtained with gallium salts.

The amount of the multi-valent Group 3a metal salts to be used in the process can be varied within wide ranges. It is preferred, however, to use amounts in the range of from 0.01 to 1.5 mole of metal salt, in particular amounts ranging of from 0.03 to 1.0 mole of metal salts per litre of water. Suitable metal salts comprise salts of inorganic acids such as nitrates, sulphates and halides. Preference is given to the use of nitrates and halides in particular chlorides. Also salts of organic acids can be suitably applied, such as acetates and propionates. If desired, mixtures of various metal salts can be applied as well as mixtures of salts having different anions, but in general best results will be obtained using nitrates and chlorides, in particular with gallium nitrate and aluminium chloride.

The starting zeolitic material is normally subjected to an ion-exchange treatment with a solution containing the appropriate metal salt(s). The treatment may be carried out by any technique known in the art. If desired the treatment may be repeated a number of times. The treatment is normally carried out at a relatively low temperature, e.g. at temperatures between 10 and 95 °C. Good results have been obtained by carrying out the ion-exchange at a temperature between 20 and 95 °C. It will normally be carried out during a time between 15 minutes and 24 hours. Preference is given to a treatment time between 30 minutes and 6 hours.

By using the process according to the present invention zeolite base materials can be obtained having a unit cell size between 2.421 nm (24.21 Å) and 2.440 nm (24.40 Å), whilst the crystallinity of the materials is substantially maintained. Depending on the severity of the final calcination step the crystallinity of the materials will in general be preserved above 90% of the initial value. Normally materials having a crystallinity of less than 65% of the initial value are not considered to be of great interest.

After the treatment with the appropriate metal-ion salt solution the materials thus treated will normally be subjected to drying before the final calcination. Drying is normally achieved by gentle heating of the materials at a temperature ranging from ambient to about 200 °C. The drying procedure may be carried out in air or by using an inert gas such as nitrogen. Partial drying is also possible depending on the type of final calcination to be applied.

The final calcination is performed at a temperature in the range of from 350 to 850 °C. Preference is given to a calcination temperature between 500 and 800 °C, in particular between 600 and 750 °C. The calcination can be performed with materials which have been dried substantially, in which case it is preferred to perform the calcination in the presence of added steam, or with materials which have been partially dried. In this latter case the addition of steam may not be necessary depending on the properties of the final material envisaged.

The calcination time may vary between wide ranges, from less than 30 minutes to a number of hours, depending on the properties envisaged. Good results have been obtained by calcining times of 1-2 hours at a temperature between 650 and 750 °C.

The zeolites modified by the process according to the present invention can be used either as catalyst carriers or as catalysts, either as such or in the form of one or more metal bearing compositions. The zeolites produced according to the present invention are particularly useful in certain hydroprocessing areas, in particular in hydrocracking. Suitable hydrocracking catalysts comprise one or more zeolites produced in accordance with the present invention together with a binder and one or more metal compounds having hydrogenating activities. Binders such as silica, alumina, silica-alumina, clays, zirconia, silica-zirconia and silica-boria can be suitably applied. Alumina is a preferred binder. Suitably 10-95% of binder can be used in the compositions according to the present invention. Preferably, 15-50 %wt of binder is used in the compositions.

The present invention further relates to catalyst compositions comprising besides a modified zeolite and a binder at least one hydrogenation component of a Group 6 metal and/or at least one hydrogenation component of a Group 8 metal. Suitably, the catalyst compositions according to the present invention comprise one or more components of nickel and/or cobalt and one or more components of molybdenum and/or tungsten or one or more components of platinum and/or palladium.

The amount(s) of hydrogenation component(s) in the catalyst compositions suitably range between 0.05 and 10 parts by weight (pbw) of Group 8 metal component(s) and between 2 and 40 pbw of Group 6 metal component(s), calculated as metal(s) per 100 pbw of total catalyst. The hydrogenation components in the catalyst compositions may be in the oxidic and/or the sulphidic form. If a combination of at least a Group 6 and a Group 8 metal component is present as (mixed) oxides, it will be subjected to a sulphiding treatment prior to proper use in hydrocracking.

Feedstocks which can be suitably subjected to a hydroconversion process using catalysts based on zeolites produced in accordance with the present invention comprise gas oils, vacuum gas oils, deasphalted oils, long residues, catalytically cracked cycle oils, coker gas oils and other thermally cracked gas oils and syncrudes, optionally originating from tar sands, shale oils, residue upgrading processes or biomass. Combinations of various feedstocks can also be applied.

It may be desirable to subject part or all of the feedstock to one or more (hydro)treatment steps prior to its use in the hydrocarbon conversion process. It is often found convenient to subject the feedstock to a (partial) hydrotreatment. When rather heavy feedstocks are to be processed it may be advantageous to subject such feedstocks to a (hydro) demetallization treatment.

Suitable process conditions to be applied comprise temperatures in the range of from 250 to 500 °C, pressures of up to 300 bar and space velocities between 0.1 and 10 kg feed per litre of catalyst per hour (kg/1 h). Gas/feed ratios between 100 and 5000 Nl/kg feed can be suitably used. Preferably, the hydroconversion process is carried out at a temperature between 300 and 450 °C, a pressure between 25 and 200 bar and a space velocity between 0.2 and 5 kg feed per litre of catalyst per hour. Preferably, gas/feed ratios between 250 and 2000 Nl/kg are applied.

The present invention will now be illustrated by means of the following Examples.

### Example 1

A crystalline alumino-silicate commercially available as LZ-Y-72 (ex Union Carbide) having a typical sodium oxide content of 2.5 %wt, a sodium oxide/aluminium oxide molar ratio of about 0.17, and a unit cell size of 2.452 nm (24.52 Å) was subjected to an ion-exchange treatment with a solution (10 ml per gramme of crystalline alumino-silicate) of 0.5 M gallium nitrate. The ion-exchange treatment was carried out for one hour at a temperature of 95 °C. After filtration, the product obtained was washed and subjected to a drying procedure at 120 °C during 16 hours. Thereafter the product was subjected to a calcination procedure in the presence of steam for a period of one hour at 700 °C. The crystalline alumino-silicate obtained contained a substantial amount of gallium. The unit cell size of the material thus obtained amounted to 2.430 nm (24.30 Å). The crystallinity of the material obtained was at least 69% of the starting material (uncorrected for the presence of gallium).

### Example 2

The procedure as described in Example 1 was repeated using an ion-exchange treatment with 0.05 M gallium nitrate which was applied twice. The unit cell size of the material obtained amounted to 2.435 nm (24.35 Å). The crystallinity of the material obtained was at least 92% of the starting material (uncorrected for the presence of gallium).

### Example 3

The procedure as described in Example 1 was repeated using an ion-exchange treatment with 0.5 M aluminium sulphate which was applied twice. The calcination procedure was carried out for one hour at 600 °C. The unit cell size of the material obtained amounted to 2.436 nm (24.36 Å) and the crystallinity was completely retained.

### Example 4

The procedure as described in Example 3 was repeated using a calcination temperature at 700 °C. The unit cell size of the material obtained amounted to 2.431 nm (24.31 Å). The crystallinity of the material obtained was 97% of that of the starting material.

### Example 5

The procedure as described in Example 1 was repeated using 0.5 M aluminium chloride. The unit cell size of the material obtained amounted to 2.428 nm (24.28 Å). The crystallinity of the material obtained was 89% of that of the starting material.

## Claims

1. Process for the preparation of a modified zeolite by treatment with a solution of one or more metal salts and a calcination which comprises treating a US-Y zeolite having a sodium oxide content of at least 2.2 %wt and an alkali oxide/aluminium oxide molar ratio between 0.13 and 1 with a solution of a salt of a multi-valent metal-ion of Group 3a and converting the thus treated zeolite by calcination at a temperature in the range from 350 to 850 °C into a product having a unit cell size between 2.421 nm (24.21 Å) and 2.440 nm (24.40 Å).

2. Process according to claim 1, which comprises using from 0.01 to 1.5 mole of multi-valent metal salt per litre of water.

3. Process according to claim 1 or claim 2, which comprises subjecting the treated zeolite to a drying procedure at a temperature of up to 200 °C, prior to calcination.

## Patentansprüche

1. Verfahren zur Herstellung modifizierter Zeolithe durch Behandlung mit einer Lösung aus einem oder mehreren Metallsalzen und Calcinieren, das darin besteht, daß man einen US-Y-Zeolith mit einem Natriumoxidgehalt von mindestens 2,2 Gew.-% und einem Alkalioxid-Aluminiumoxid-Molverhältnis zwischen 0,13 und 1 mit einer Lösung eines Salzes eines mehrwertigen Metallions aus Gruppe 3a behandelt und den so behandelten Zeolith durch Calcinieren bei einer Temperatur im Bereich von 350 bis 850°C zu einem Produkt mit einer Elementarzellengröße zwischen 2,421 nm (24,21 Å) und 2,440 nm (24,40 Å umsetzt.

2. Verfahren nach Anspruch 1, wobei man pro Liter Wasser 0,01 bis 1,5 Mol eines Salzes eines mehrwertigen Metalls einsetzt.

3. Verfahren nach Anspruch 1 oder Anspruch 2, das darin besteht, daß man den behandelten Zeolith vor dem Calcinieren einem Trocknungsverfahren bei einer Temperatur von bis zu 200°C unterwirft.

## Revendications

1. Procédé de préparation d'une zéolite modifiée par un traitement avec une solution d'un ou plusieurs sels de métaux et une calcination, caractérisé en ce que l'on traite une zéolite Y-US possédant une teneur en oxyde de sodium d'au moins 2,2% en poids et un rapport molaire de l'oxyde de métal alcalin à l'oxyde d'aluminium compris entre 0,13 et 1, par une solution d'un sel d'un ion d'un métal multivalent du groupe 3a et on convertit la zéolite ainsi traitée par calcination à une température qui varie de 350 à 850°C en un produit qui possède un calibre cellulaire unitaire qui fluctue de 2,421 nm (24,21 Å) et 2,440 nm (24,40 Å).

2. Procédé suivant la revendication 1, caractérisé en ce que l'on utilise 0,01 à 1,5 mole de sel de métal multivalent par titre d'eau.

3. Procédé suivant la revendication 1 ou la revendication 2, caractérisé en ce que l'on soumet la zéolite traitée à un processus de séchage à une température s'élevant jusqu'à 200°C, avant d'entreprendre la calcination.
